# EUROPÄISCHE PATENTANMELDUNG

(11) **EP 3 720 247 A1**
(43) Veröffentlichungstag der Anmeldung: **07.10.2020**
(21) Anmeldenummer: 20168041.0
(22) Anmeldetag: 03.04.2020
(51) Int. Cl.: H05B 6/14, H05B 6/40, B23P 11/02

(54) **VERFAHREN ZU EINEM AUFHEIZEN EINER WERKZEUGAUFNAHME MITTELS EINER INDUKTIONSHEIZVORRICHTUNG UND EIN- UND/ODER AUSSCHRUMPFSPANNSTATION FÜR WERKZEUGE**

(30) Priorität: 04.04.2019 DE 102019108906
(71) Anmelder: E. Zoller GmbH & Co. KG Einstell- und Messgeräte, 74385 Pleidelsheim (DE)
(72) Erfinder: Zoller, Alexander, 74385 Pleidelsheim (DE); Pfau, Christian, 74379 Ingersheim (DE)
(74) Vertreter: Daub, Thomas

(57) **Zusammenfassung**

Die Erfindung geht aus von einem Verfahren zu einem Aufheizen einer Werkzeugaufnahme (14) mittels einer Induktionsheizvorrichtung (10) für ein Ein- und/oder Ausschrumpfen von Werkzeugen (12) in und/oder aus Werkzeugaufnahmen (14), insbesondere Induktionsheizeinheit (16) einer Ein- und/oder Ausschrumpfspannstation (18) für Werkzeuge (12), mit einer zumindest eine, vorzugsweise ausschließlich eine, Induktionsspule (20) umfassenden Induktionsheizeinheit (16), welche dazu vorgesehen ist, zumindest einen Teil der Werkzeugaufnahme (14), insbesondere zumindest einen Spannbereich (22) der Werkzeugaufnahme (14), bei einem Einschrumpfvorgang oder bei einem Ausschrumpfvorgang durch Erhitzen aufzuweiten.

Es wird vorgeschlagen, dass zumindest die Induktionsspule (20) während eines Induktionsheizvorgangs bewegt wird.

## Beschreibung

### Stand der Technik

Die Erfindung betrifft ein Verfahren zu einem Aufheizen einer Werkzeugaufnahme mittels einer Induktionsheizvorrichtung nach dem Oberbegriff des Anspruchs 1 und eine Ein- und/oder Ausschrumpfspannstation für Werkzeuge nach dem Anspruch 10.

Es ist bereits ein Verfahren zu einem Aufheizen einer Werkzeugaufnahme mittels einer Induktionsheizvorrichtung für ein Ein- und/oder Ausschrumpfen von Werkzeugen in und/oder aus Werkzeugaufnahmen mit einer zumindest eine Induktionsspule umfassenden Induktionsheizeinheit, welche dazu vorgesehen ist, zumindest einen Teil der Werkzeugaufnahme bei einem Einschrumpfvorgang oder bei einem Ausschrumpfvorgang durch Erhitzen aufzuweiten, vorgeschlagen worden.

Die Aufgabe der Erfindung besteht insbesondere darin, ein Verfahren mit vorteilhaften Eigenschaften hinsichtlich eines Aufheizens von Werkzeugaufnahmen für einen Einschrumpfvorgang oder einen Ausschrumpfvorgang von Werkzeugen bereitzustellen. Die Aufgabe wird erfindungsgemäß durch die Merkmale der Patentansprüche 1 und 10 gelöst, während vorteilhafte Ausgestaltungen und Weiterbildungen der Erfindung den Unteransprüchen entnommen werden können.

### Vorteile der Erfindung

Die Erfindung geht aus von einem Verfahren zu einem Aufheizen einer Werkzeugaufnahme mittels einer Induktionsheizvorrichtung für ein Ein- und/oder Ausschrumpfen von Werkzeugen in und/oder aus Werkzeugaufnahmen, insbesondere einer Induktionsheizeinheit einer Ein- und/oder Ausschrumpfspannstation für Werkzeuge, mit einer zumindest eine, vorzugsweise ausschließlich eine, Induktionsspule umfassenden Induktionsheizeinheit, welche dazu vorgesehen ist, zumindest einen Teil der Werkzeugaufnahme, insbesondere zumindest einen Spannbereich der Werkzeugaufnahme, bei einem Einschrumpfvorgang oder bei einem Ausschrumpfvorgang durch Erhitzen aufzuweiten.

Es wird vorgeschlagen, dass zumindest die Induktionsspule während eines Induktionsheizvorgangs, insbesondere aktiv, bewegt wird. Dadurch können vorteilhafte Heizeigenschaften erreicht werden. Insbesondere kann vorteilhaft eine gleichmäßige Erwärmung eines Spannbereichs einer Werkzeugaufnahme erreicht werden. Insbesondere kann ein Heizbereich, innerhalb von welchem eine Werkzeugaufnahme bei dem Einschrumpfvorgang oder bei dem Ausschrumpfvorgang durch ein Induktionsmagnetfeld der Induktionsspule erwärmt wird, präzise an eine Länge eines vorgesehen Spannbereichs der Werkzeugaufnahme angepasst werden. Zudem kann dadurch vorteilhaft die Induktionsheizvorrichtung besonders einfach gehalten werden, beispielsweise nur mit einer einzelnen Spulenwicklung, welche vorzugsweise eine Axialerstreckung aufweist, welche kleiner ist als eine geringste zu erwartende Einspannhöhe oder welche der geringsten zu erwartenden Einspannhöhe entspricht. Dadurch kann vorteilhaft eine besonders kostengünstige und/oder fehlerunanfällige Induktionsheizvorrichtung erreicht werden. Insbesondere kann vorteilhaft eine Höhe der Induktionsspule, insbesondere der Wicklungen der Induktionsspule, relativ schmal gehalten werden.

Unter einer "Werkzeugaufnahme" soll insbesondere ein Bauteil verstanden werden, welches zu einer Aufnahme eines Werkzeugs und einer Verbindung des Werkzeugs mit einer Maschine vorgesehen ist. Insbesondere ist die Werkzeugaufnahme als eine Schnittstelle zwischen Werkzeug und Maschine ausgebildet. Vorzugsweise ist die Werkzeugaufnahme als ein Werkzeugfutter, insbesondere ein Schrumpffutter, ausgebildet. Insbesondere weist die Werkzeugaufnahme eine Werkzeugaufnahmeöffnung auf, welche dazu vorgesehen ist, ein Werkzeug aufzunehmen und zumindest kraftschlüssig zu haltern. Das Werkzeug ist insbesondere als ein Schaftwerkzeug, vorzugsweise als ein Rotations-Schaftwerkzeug, beispielsweise ein Bohrer, ein Fräser, ein Profilwerkzeug und/oder eine Reibahle ausgebildet. Unter einem "Einschrumpfen von Werkzeugen in und/oder aus Werkzeugaufnahmen" soll insbesondere ein Einspannen von Werkzeugen in Werkzeugaufnahmen verstanden werden, bei dem eine Werkzeugaufnahmeöffnung der Werkzeugaufnahme zunächst thermisch aufgeweitet wird, dann ein Werkzeug in die Werkzeugaufnahmeöffnung eingeführt wird und wobei das Werkzeug schließlich nach einem Abkühlen der Werkzeugaufnahme durch einen Kraftschluss, insbesondere einen Reibschluss, in der Werkzeugaufnahme befestigt ist. Unter einem "Ausschrumpfen von Werkzeugen in und/oder aus Werkzeugaufnahmen" soll insbesondere ein Lösen von mittels einem Kraftschluss, insbesondere einem Reibschluss, in Werkzeugaufnahmen befestigten Werkzeugen verstanden werden, bei dem die Werkzeugaufnahmeöffnung der Werkzeugaufnahme, insbesondere unter Vermeidung einer gleichzeitigen Erwärmung des Werkzeugs durch die Abschirmeinheit, thermisch soweit aufgeweitet wird, bis das in der Werkzeugaufnahme befestigte Werkzeug aus der Werkzeugaufnahme entnehmbar ist.

Unter einer "Ein- und/oder Ausschrumpfspannstation für Werkzeuge" soll insbesondere eine Vorrichtung verstanden werden, welche dazu vorgesehen ist, einen Einschrumpfvorgang und/oder einen Ausschrumpfvorgang von Werkzeugen in Werkzeugaufnahmen, vorzugsweise zumindest zu einem Großteil automatisiert, bevorzugt vollständig automatisiert, vorzunehmen. Unter "zumindest einem Teil der Werkzeugaufnahme" oder unter einem "Spannbereich der Werkzeugaufnahme" soll insbesondere zumindest ein, insbesondere in Radialrichtung der Werkzeugaufnahmeöffnung, die Werkzeugaufnahmeöffnung der Werkzeugaufnahmeumgebender Bereich der Werkzeugaufnahme verstanden werden. Bei dem "Einschrumpfvorgang" wird insbesondere ein Werkzeug in der Werkzeugaufnahme zumindest kraftschlüssig und unter Ausnutzung von Wärmeausdehnungseigenschaften eines Materials der Werkzeugaufnahme befestigt. Bei dem "Ausschrumpfvorgang" wird insbesondere ein zumindest kraftschlüssig in der Werkzeugaufnahme befestigtes Werkzeug unter Ausnutzung der Wärmeausdehnungseigenschaften des Materials der Werkzeugaufnahme aus der Werkzeugaufnahme entnommen. Unter einem "Induktionsheizvorgang" soll insbesondere zumindest ein Teil des Einschrumpfvorgangs oder des Ausschrumpfvorgangs verstanden werden, während welchem die Werkzeugaufnahme durch ein von der Induktionsspule erzeugtes Magnetfeld erwärmt wird. Unter einer "aktiven Bewegung" soll insbesondere eine Bewegung verstanden werden, welche zumindest durch eine Antriebseinheit, beispielsweise der Induktionsheizvorrichtung und/oder der Ein- und/oder Ausschrumpfspannstation, erzeugt wird und/oder welche zumindest durch eine Steuer- und/oder Regeleinheit, beispielsweise der Induktionsheizvorrichtung und/oder der Ein- und/oder Ausschrumpfspannstation, gesteuert und/oder geregelt wird. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Insbesondere umfasst die Induktionsheizvorrichtung genau eine Induktionsspule, deren Spulenwicklungen sich in Axialrichtung der Induktionsspule über eine Länge erstrecken, welche einem Spannbereich einer kleinsten mittels der Induktionsheizvorrichtung spannbaren Werkzeugaufnahme entspricht.

Wenn die Induktionsspule während des Induktionsheizvorgangs oszillierend bewegt wird, können vorteilhafte Heizeigenschaften erreicht werden. Insbesondere kann vorteilhaft eine besonders gleichmäßige Erwärmung eines Spannbereichs einer Werkzeugaufnahme erreicht werden. Unter einer "oszillierenden Bewegung" soll insbesondere eine pendelnde, vorzugsweise rhythmisch pendelnde, räumliche Bewegung, vorzugsweise Auf- und Abbewegung, welche bevorzugt um einen Fixpunkt entlang einer Vertikalachse schwingt, verstanden werden. Insbesondere soll unter der oszillierenden Bewegung eine pulsierende Bewegung verstanden werden. Insbesondere wird die Induktionsspule während des Induktionsheizvorgangs translatorisch oszilliert.

Ferner wird vorgeschlagen, dass die Induktionsspule während des Induktionsheizvorgangs entlang einer Axialrichtung der zu erwärmenden Werkzeugaufnahme und/oder einer Axialrichtung der Induktionsspule bewegt wird. Dadurch können vorteilhafte Heizeigenschaften erreicht werden. Insbesondere kann vorteilhaft eine gleichmäßige Erwärmung eines Spannbereichs einer Werkzeugaufnahme erreicht werden. Die Axialrichtung der Werkzeugaufnahme verläuft insbesondere entlang einer vorgesehenen Rotationsachse der Werkzeugaufnahme und/oder eines in der Werkzeugaufnahme befestigten Werkzeugs. Die Axialrichtung der Induktionsspule verläuft insbesondere zentral durch ein Inneres der Spulenwicklung der Induktionsspule. Die Axialrichtung der Induktionsspule und die Axialrichtung der Werkzeugaufnahme sind in der Regel während dem Einschrumpfvorgang oder während dem Ausschrumpfvorgang zumindest im Wesentlichen identisch zueinander.

Außerdem wird vorgeschlagen, dass die Induktionsspule und/oder die Werkzeugaufnahme während des Induktionsheizvorgangs zumindest teilweise um eine parallel zu einer Axialrichtung der Werkzeugaufnahme verlaufende Rotationsachse, insbesondere der Induktionsspule oder der Werkzeugaufnahme rotierend bewegt wird. Dadurch können vorteilhafte Heizeigenschaften erreicht werden. Insbesondere kann vorteilhaft eine besonders gleichmäßige Erwärmung eines Spannbereichs einer Werkzeugaufnahme erreicht werden. Unter einem "zumindest teilweisen Rotieren" soll insbesondere ein Rotieren um zumindest einen Bruchteil von 360° verstanden werden, beispielsweise 90°, 180° oder 270°. Alternativ oder zusätzlich ist vorstellbar, dass die Werkzeugaufnahme und/oder die Induktionsspule zumindest eine oder zumindest eine Mehrzahl an vollen Umdrehungen während des Induktionsheizvorgangs absolviert. Zudem ist denkbar, dass die Induktionsspule und/oder die Werkzeugaufnahme oszillierend rotiert wird. Des Weiteren ist denkbar, dass die Induktionsspule und/oder die Werkzeugaufnahme eine Schraubenlinie beschreibt.

Zudem wird vorgeschlagen, dass ein Bewegungsbereich der Induktionsspule, in welchem die Induktionsspule während des Induktionsheizvorgangs bewegt wird, einen bei dem Einschrumpfvorgang oder bei dem Ausschrumpfvorgang zu erhitzenden Bereich der Werkzeugaufnahme, insbesondere einen Spannbereich der Werkzeugaufnahme, vollständig abdeckt. Dadurch können vorteilhafte Heizeigenschaften erreicht werden. Insbesondere kann vorteilhaft eine besonders gleichmäßige Erwärmung eines gesamten Spannbereichs einer Werkzeugaufnahme erreicht werden. Insbesondere wird die Induktionsspule zwischen zwei Extrempunkten translatorisch oszilliert, deren Abstand und Position entlang der Axialrichtung der Werkzeugaufnahme dem Bereich entspricht, welcher zur Ermöglichung eines Einsteckens eines Werkzeugs in die Werkzeugaufnahme oder eines Entnehmens des Werkzeugs aus der Werkzeugaufnahme aufgeweitet werden muss. Insbesondere entspricht der Abstand der Extrempunkte zumindest im Wesentlichen einer vorgesehenen Einsteck- und/oder Spanntiefe des Werkzeugs in der Werkzeugaufnahme. Unter einem "bei dem Einschrumpfvorgang oder bei dem Ausschrumpfvorgang zu erhitzenden Bereich" soll insbesondere ein Bereich der Werkzeugaufnahme verstanden werden, welcher erhitzt werden muss, um ein Einstecken eines Werkzeugs bis zu der vorgesehenen Einsteck- und/oder Spanntiefe des Werkzeugs in der Werkzeugaufnahme oder ein Entnehmen eines mit einer bestimmten Einsteck-und/oder Spanntiefe in die Werkzeugaufnahme eingesteckten Werkzeugs aus der Werkzeugaufnahme zu ermöglichen.

Weiterhin wird vorgeschlagen, dass ein Bewegungsbereich der Induktionsspule in Abhängigkeit von der jeweiligen aufzuheizenden Werkzeugaufnahme und/oder in Abhängigkeit von dem jeweiligen einzuschrumpfenden Werkzeug eingestellt wird. Dadurch können vorteilhafte Heizeigenschaften erreicht werden. Insbesondere kann vorteilhaft eine besonders gleichmäßige Erwärmung eines gesamten Spannbereichs einer Werkzeugaufnahme erreicht werden. Zudem kann vorteilhaft eine hohe Flexibilität erreicht werden, insbesondere indem eine Vielzahl verschiedener Werkzeuge effektiv mit derselben Induktionsheizvorrichtung ein-und/oder ausgeschrumpft werden können. Insbesondere ist der Bewegungsbereich abhängig von der idealen und/oder vorgesehenen Einsteck-und/oder Spanntiefe eines jeweiligen Werkzeugs in der Werkzeugaufnahme. Insbesondere wird eine Werkzeugaufnahme und ein Werkzeug vor dem Induktionsheizvorgang, insbesondere mittels der Steuer- und/oder Regeleinheit der Induktionsheizvorrichtung und/oder der Ein- und/oder Ausschrumpfspannstation, identifiziert, beispielsweise mittels einer Kameraerkennung von Werkzeuginformationen und/oder Werkzeugaufnahmeinformationen oder mittels einer Eingabe und/oder eines Auslesens von Werkzeuginformationen und/oder Werkzeugaufnahmeinformationen. Insbesondere wird von der Steuer- und/oder Regeleinheit auf Basis der Werkzeuginformationen und/oder Werkzeugaufnahmeinformationen der Bewegungsbereich der Induktionsspule bestimmt und eingestellt.

Zudem wird vorgeschlagen, dass die Induktionsspule in Axialrichtung innerhalb eines maximalen Bewegungsbereichs von zumindest 5 mm, vorzugsweise zumindest 10 mm, vorteilhaft zumindest 20 mm, besonders vorteilhaft zumindest 40 mm, bevorzugt zumindest 60 mm und besonders bevorzugt höchstens 100 mm, bewegt wird. Dadurch kann vorteilhafte Heizeigenschaften erreicht werden. Insbesondere können dadurch kann vorteilhaft eine Vielzahl verschiedener Spannbereiche abgefahren werden, wodurch vorteilhaft eine Eignung des Verfahrens für eine Vielzahl verschiedener Werkzeuge und Werkzeugaufnahmen erreicht werden kann. Unter einem "maximalen Bewegungsbereich" soll insbesondere ein maximaler Bereich verstanden werden, innerhalb welchem die Extrempunkte der translatorischen Oszillation der Induktionsspule verordnet sein können.

Zusätzlich wird vorgeschlagen, dass die Induktionsspule mit einer Frequenz von zumindest 0,5 Hz, vorzugsweise zumindest 1 Hz, vorteilhaft zumindest 2 Hz, besonders vorteilhaft zumindest 5 Hz, bevorzugt zumindest 10 Hz und besonders bevorzugt höchstens 20 Hz, insbesondere translatorisch, oszillierend bewegt wird. Dadurch können vorteilhafte Heizeigenschaften erreicht werden. Insbesondere kann vorteilhaft eine besonders gleichmäßige Erwärmung eines gesamten Spannbereichs einer Werkzeugaufnahme erreicht werden.

Außerdem wird vorgeschlagen, dass die oszillierende Bewegung der Induktionsspule im Anschluss an ein Aufheizen der Werkzeugaufnahme dafür verwendet wird, Kühlluft auf den erhitzten Spannbereich der Werkzeugaufnahme aufzubringen. Dadurch können vorteilhafte Schrumpfspanneigenschaften erreicht werden. Vorteilhaft kann ein Abkühlen und damit ein Einschrumpfvorgang beschleunigt werden. Vorteilhaft kann eine Arbeitssicherheit erhöht werden, insbesondere indem heiße Werkzeugaufnahmen schnell, effektiv und automatisiert gekühlt werden können. Insbesondere umfasst die Induktionsspule zumindest eine Kühleinheit, welche eine Düse aufweist, die dazu vorgesehen ist, Kühlluft in Richtung einer in der Ein- und/oder Ausschrumpfspannstation eingespannten Werkzeugaufnahme zu blasen. Insbesondere wird durch die Oszillationsbewegung der Induktionsspule und/oder der Induktionsheizeinheit die Kühlluft der Kühleinheit über den ganzen Spannbereich der Werkzeugaufnahme verteilt abgegeben.

Ferner wird eine Ein- und/oder Ausschrumpfspannstation für Werkzeuge mit einer, eine Induktionsspule aufweisenden Induktionsheizvorrichtung für ein Ein- und/oder Ausschrumpfen von Werkzeugen in und/oder aus Werkzeugaufnahmen, welche zumindest dazu vorgesehen ist, das oben beschriebene Verfahren auszuführen, vorgeschlagen. Dadurch können vorteilhafte Heizeigenschaften erreicht werden.

Wenn die Ein- und/oder Ausschrumpfspannstation eine Turmeinheit aufweist, mit welcher die Induktionsheizvorrichtung gekoppelt ist und welche eine Antriebseinheit aufweist, die zumindest dazu vorgesehen ist, zumindest die Induktionsheizeinheit der Induktionsheizvorrichtung entlang der Turmeinheit zu bewegen, wobei die Antriebseinheit zumindest dazu vorgesehen ist, eine oszillierende Bewegung der Induktionsheizvorrichtung, insbesondere eine relativ zu der Turmeinheit oszillierende Bewegung der Induktionsheizeinheit, zu erzeugen, können vorteilhafte Heizeigenschaften erreicht werden. Insbesondere kann dadurch eine besonders einfache Methode zur Erzeugung der, insbesondere oszillierenden, Bewegung der Induktionsspule erreicht werden.

Des Weiteren wird vorgeschlagen, dass die Induktionsheizvorrichtung zumindest eine Induktionsspulen-Antriebseinheit aufweist, welche dazu vorgesehen ist, die Induktionsspule relativ zu der Induktionsheizvorrichtung, insbesondere relativ zu einem Gehäuse der Induktionsheizeinheit, oszillierend zu bewegen. Dadurch können vorteilhafte Heizeigenschaften erreicht werden. Vorteilhaft kann eine Trägheit der bewegten Teile der Induktionsheizvorrichtung besonders gering gehalten werden, wodurch eine besonders vorteilhafte, insbesondere besonders schnelle Oszillation der Induktionsspule ermöglicht werden kann. Zudem kann vorteilhaft ein Verschleiß verringert werden.

Zusätzlich wird vorgeschlagen, dass die Ein- und/oder Ausschrumpfspannstation eine Kühleinheit aufweist, welche zumindest eine Düse aufweist, die dazu vorgesehen ist, Kühlluft in Richtung einer Werkzeugaufnahme zu blasen, wobei die Kühleinheit fest mit der entlang der Axialrichtung oszillierbaren Induktionsheizvorrichtung gekoppelt ist. Dadurch können vorteilhafte Schrumpfspanneigenschaften erreicht werden. Vorteilhaft kann ein Abkühlen und damit ein Einschrumpfvorgang beschleunigt werden. Vorteilhaft kann eine Arbeitssicherheit erhöht werden, insbesondere indem heiße Werkzeugaufnahmen schnell, effektiv und automatisiert gekühlt werden können. Insbesondere umfasst die Kühleinheit eine Mehrzahl an Düsen, welche verteilt angeordnet sind. Insbesondere sind die Düsen ringförmig um ein gemeinsames Zentrum der Kühleinheit und der Induktionsspule angeordnet. Insbesondere bildet die Kühleinheit einen Kühlring aus. Insbesondere ist die Kühleinheit mit der Induktionsspule und/oder mit der Induktionsheizvorrichtung mitbewegbar ausgebildet. Insbesondere kann die Kühleinheit dadurch in derselben Weise wie die Induktionsspule oszillierend entlang der Axialrichtung der Induktionsspule und/oder der Kühleinheit bewegt werden.

Das erfindungsgemäße Verfahren und die erfindungsgemäße Ein- und/oder Ausschrumpfspannstation sollen hierbei nicht auf die oben beschriebene Anwendung und Ausführungsform beschränkt sein. Insbesondere kann das erfindungsgemäße Verfahren und die erfindungsgemäße Ein- und/oder Ausschrumpfspannstation zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Schnittansicht einer Ein- und/oder Ausschrumpfspannstation mit einer Induktionsheizvorrichtung und
- Fig. 2: ein Ablaufdiagramm eines Verfahrens zu einem Aufheizen einer Werkzeugaufnahme mittels der Induktionsheizvorrichtung.

### Beschreibung des Ausführungsbeispiels

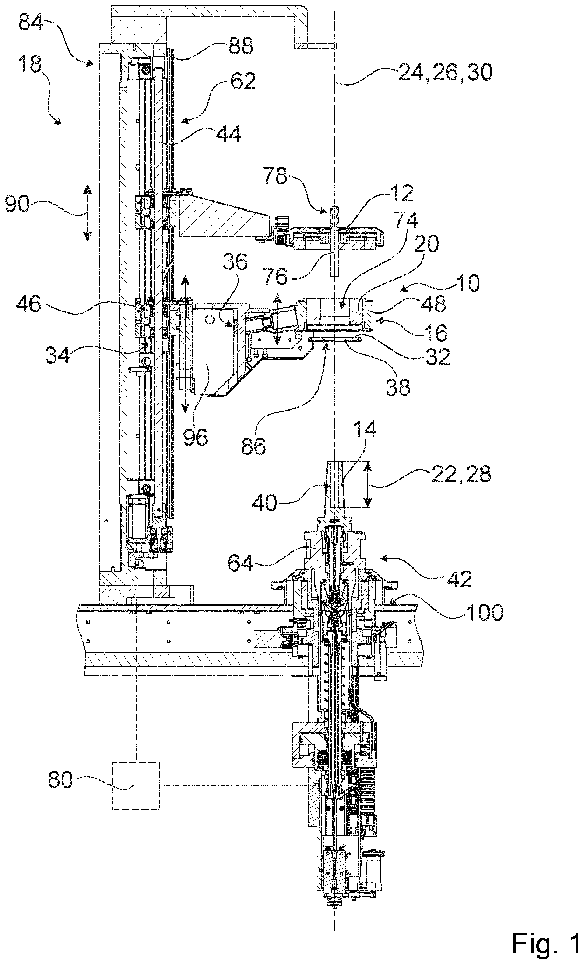

Fig. 1 zeigt eine Ein- und/oder Ausschrumpfspannstation 18. Die Ein- und/oder Ausschrumpfspannstation 18 ist zu einem automatisierten Ein- und/oder Ausschrumpfen von Werkzeugen 12 in und/oder aus Werkzeugaufnahmen 14 vorgesehen. Die Ein- und/oder Ausschrumpfspannstation 18 ist zu einer Durchführung eines Einschrumpfvorgangs an Werkzeugen 12 zur Befestigung der Werkzeuge 12 in Werkzeugaufnahmen 14 und/oder zu einer Durchführung eines Ausschrumpfvorgangs an Werkzeugen 12 zur Entnahme der Werkzeuge 12 aus Werkzeugaufnahmen 14 vorgesehen. Die Ein- und/oder Ausschrumpfspannstation 18 weist eine Induktionsheizvorrichtung 10 auf. Die Induktionsheizvorrichtung 10 ist zu einem Erhitzen der Werkzeugaufnahmen 14 vorgesehen. Die Werkzeugaufnahmen 14 sind als Schrumpfspannfutter ausgebildet. Die Werkzeugaufnahmen 14 weisen Werkzeugaufnahmeöffnungen 40 auf. Die Werkzeuge 12 sind als Schaftwerkzeuge ausgebildet. Die Werkzeuge 12 weisen einen Werkzeugschaft 76 auf. Die Werkzeuge 12 weisen einen Arbeitsbereich 78 auf. Die Werkzeugaufnahmeöffnungen 40 der Werkzeugaufnahmen 14 sind dazu vorgesehen, den Werkzeugschaft 76 eines Werkzeugs 12 aufzunehmen. Vorzugsweise ist der Werkzeugschaft 76 in einem in die Werkzeugaufnahme 14 eingespannten Zustand nahezu vollständig, insbesondere bis auf einen höchstens 5 mm, vorzugsweise höchstens 3 mm, bevorzugt höchstens 2 mm messenden Bereich in die Werkzeugaufnahmeöffnung 40 der Werkzeugaufnahme 14 eingesteckt. Dieser Bereich entspricht der idealen und/oder vorgesehenen Einsteck- und/oder Spanntiefe der Werkzeuge 12 in der Werkzeugaufnahme 14.

Die Induktionsheizvorrichtung 10 weist eine Induktionsheizeinheit 16 auf. Die Induktionsheizeinheit 16 ist dazu vorgesehen, die Werkzeugaufnahmeöffnung 40 der Werkzeugaufnahme 14 bei dem Einschrumpfvorgang und/oder bei dem Ausschrumpfvorgang durch ein Erhitzen aufzuweiten. Die Induktionsheizeinheit 16 weist genau eine Induktionsspule 20 auf. Die Induktionsspule 20 ist während eines Induktionsheizvorgangs bewegbar ausgebildet. Die Induktionsspule 20 ist während eines Induktionsheizvorgangs oszillierbar ausgebildet. Die Induktionsheizeinheit 16 ist dazu vorgesehen, ein Induktionsmagnetfeld zu erzeugen. Das Induktionsmagnetfeld ist dazu vorgesehen, mit dem Material der Werkzeugaufnahme 14 zu einer Erhitzung und damit zu einer Aufweitung der Werkzeugaufnahme 14 wechselzuwirken. Die Induktionsspule 20 weist eine Öffnung 74 auf. Die Öffnung 74 der Induktionsspule 20 ist parallel zu einer Axialrichtung 24 der Ein- und/oder Ausschrumpfspannstation 18 und/oder parallel zu einer Axialrichtung 24 der Induktionsspule 20 ausgerichtet. Die Induktionsspule 20 umfasst Spulenwicklungen, welche um die Öffnung 74 der Induktionsspule 20 gewickelt sind. Die Ein- und/oder Ausschrumpfspannstation 18 weist eine Steuer-und/oder Regeleinheit 80 auf. Die Steuer- und/oder Regeleinheit 80 ist zumindest dazu vorgesehen, eine Beaufschlagung der Induktionsspule 20 mit Wechselstrom zu einer Erzeugung eines Induktionsmagnetfelds zu beaufschlagen. Eine Erstreckung der Induktionsspule 20 in Axialrichtung 24 entspricht einem minimalen Bereich, welcher durch die Induktionsspule 20 während dem Einschrumpfvorgang oder während dem Ausschrumpfvorgang mit einem Induktionsmagnetfeld beaufschlagt wird. Die Induktionsheizeinheit 16 umfasst eine Kühleinheit 86. Die Kühleinheit 86 ist unterhalb der Induktionsspule 20 angeordnet. Die Kühleinheit 86 ist zu einer Kühlung der Werkzeugaufnahme 14 im Anschluss an ein Einsetzen eines Werkzeugs 12 in die Werkzeugaufnahme 14 und/oder im Anschluss an ein Entnehmen eines Werkzeugs 12 aus der Werkzeugaufnahme 14 vorgesehen.

Die Kühleinheit 86 umfasst eine Düse 38. Die Düse 38 ist dazu vorgesehen, Kühlluft, insbesondere Druckluft, in eine Richtung senkrecht zu der Axialrichtung 24 der Induktionsspule 20 zu blasen. Die Düse 38 ist dazu vorgesehen, Kühlluft in Richtung einer Werkzeugaufnahme 14 zu blasen. Die Düse 38 ist dazu vorgesehen, Kühlluft auf eine zuvor durch die Induktionsspule 20 aufgeheizte Werkzeugaufnahme 14 zu blasen. Die Kühleinheit 86 ist fest mit der entlang der Axialrichtung 24 oszillierbaren Induktionsheizvorrichtung 10 gekoppelt. Die Kühleinheit 86 ist unterhalb der Induktionsspule 20 angeordnet. Die Kühleinheit 86 bildet einen Kühlring 32 aus. Der Kühlring 32 umfasst mehrere in Richtung eines Inneren des Kühlrings 32 angeordnete Düsen 38. Die Induktionsspule 20 und der Kühlring 32 sind um eine gemeinsame Achse 30 zentriert, welche sich entlang eines Zentrums der Öffnung 74 der Induktionsspule 20 erstreckt.

Die Ein- und/oder Ausschrumpfspannstation 18 weist eine Turmeinheit 84 auf. Die Induktionsheizvorrichtung 10 ist mit der Turmeinheit 84 gekoppelt. Die Turmeinheit 84, insbesondere eine Haupterstreckungsrichtung 90 der Turmeinheit 84, erstreckt sich parallel zu der Axialrichtung 24 der Induktionsspule 20. Die Induktionsheizeinheit 16 ist an der Turmeinheit 84 beweglich gelagert. Die Induktionsheizeinheit 16 umfasst einen Schlitten 96. Der Schlitten 96 der Induktionsheizeinheit 16 ist zu der beweglichen Lagerung der Induktionsheizeinheit 16 an der Turmeinheit 84 vorgesehen. Vorzugsweise umfasst die Induktionsheizeinheit 16 zumindest zwei Schlitten 96, wodurch vorteilhaft eine besonders hohe Präzision der Bewegung der Induktionsheizeinheit 16 erreicht werden kann. Die Induktionsheizeinheit 16 ist entlang der Haupterstreckungsrichtung 90 der Turmeinheit 84 an der Turmeinheit 84 auf- und abbewegbar. Die Induktionsheizeinheit 16 ist CNC-gesteuert an der Turmeinheit 84 auf- und abbewegbar. Die Steuer- und/oder Regeleinheit 80 ist dazu vorgesehen, die Bewegung der Induktionsheizeinheit 16 entlang der Turmeinheit 84 zu steuern. Die Turmeinheit 84 umfasst zumindest eine Führungseinheit 62 mit zumindest einer Führungsschiene 88 zu einer Führung einer Bewegung der Induktionsheizeinheit 16. Vorzugsweise weist die Führungseinheit 62 zwei parallel entlang der Haupterstreckungsrichtung 90 der Turmeinheit 84 verlaufende Führungsschienen 88 auf. Dadurch kann vorteilhaft eine besonders lineare Bewegungsführung erreicht werden.

Die Ein- und/oder Ausschrumpfspannstation 18 umfasst eine Antriebseinheit 34. Die Turmeinheit 84 umfasst die Antriebseinheit 34. Die Antriebseinheit 34 ist dazu vorgesehen, die Induktionsheizeinheit 16 der Induktionsheizvorrichtung 10 entlang der Axialrichtung 24 der Turmeinheit 84 zu bewegen. Die Antriebseinheit 34 ist dazu vorgesehen, eine oszillierende Bewegung der Induktionsheizeinheit 16 zu erzeugen. Die Antriebseinheit 34 ist dazu vorgesehen, die Induktionsheizeinheit 16, insbesondere die Induktionsspule 20 während des Induktionsheizvorgangs zu bewegen. Die Antriebseinheit 34 ist dazu vorgesehen, die Induktionsheizeinheit 16, insbesondere die Induktionsspule 20 während des Induktionsheizvorgangs oszillierend zu bewegen. Die Antriebseinheit 34 ist dazu vorgesehen, eine relativ zu der Turmeinheit 84 oszillierende Bewegung der Induktionsheizeinheit 16 zu erzeugen. Die Antriebseinheit 34 umfasst eine Antriebswelle 44. Die Antriebswelle 44 ist zumindest zu einem Großteil in der Turmeinheit 84 angeordnet. Die Antriebswelle 44 ist dazu vorgesehen, mit der Induktionsheizvorrichtung 10 zu koppeln. In dem mit der Antriebswelle 44 gekoppelten Zustand bewegt sich die Induktionsheizeinheit 16 bei einer Rotation der Antriebswelle 44 entlang der Axialrichtung 24 an der Führungsschiene 88 auf- oder abwärts, je nach Rotationsrichtung der Antriebswelle 44. Die Induktionsheizvorrichtung 10 ist über ein Rollringgetriebe 46 mit der Antriebswelle 44 koppelbar. Das Rollringgetriebe 46 bildet zusammen mit der Antriebswelle 44 einen Uhing-Antrieb aus. Alternative Antriebseinheiten, insbesondere von einem Uhing-Antrieb abweichende Antriebseinheiten sind denkbar.

Die Induktionsheizvorrichtung 10 weist eine Induktionsspulen-Antriebseinheit 36 auf. Die Induktionsspulen-Antriebseinheit 36 ist getrennt von der Antriebseinheit 34 der Turmeinheit 84 ausgebildet. Die Induktionsspulen-Antriebseinheit 36 ist getrennt von der Turmeinheit 84 ausgebildet. Die Induktionsspulen-Antriebseinheit 36 ist dazu vorgesehen, die Induktionsspule 20 relativ zu der Induktionsheizvorrichtung 10 oszillierend zu bewegen. Die Induktionsheizvorrichtung 10 weist ein Gehäuse 48 auf. Die Induktionsspulen-Antriebseinheit 36 ist dazu vorgesehen, die Induktionsspule 20 relativ zu dem Gehäuse 48 der Induktionsheizeinheit 16 oszillierend zu bewegen. Alternativ oder zusätzlich sind die Induktionsspulen-Antriebseinheit 36 oder eine weitere Induktionsspulen-Antriebseinheit (nicht gezeigt) dazu vorgesehen, die Induktionsspule 20 während des Induktionsheizvorgangs um eine Rotationsachse 26 zu rotieren. Die Rotationsachse 26 der Induktionsspule 20 verläuft parallel zu der Axialrichtung 24 der Werkzeugaufnahme 14. Die Induktionsspule 20 ist dazu vorgesehen, während dem Induktionsheizvorgang innerhalb eines beschränkten Bewegungsbereichs 28 bewegt zu werden. Die Induktionsspule 20 ist dazu vorgesehen, während dem Induktionsheizvorgang innerhalb des Bewegungsbereichs 28 zu oszillieren. Der Bewegungsbereich 28 erstreckt sich über einen kompletten, bei dem Einschrumpfvorgang oder bei dem Ausschrumpfvorgang zu erhitzenden Bereich der Werkzeugaufnahme 14. Der Bewegungsbereich 28 erstreckt sich über einen Spannbereich 22 der Werkzeugaufnahme 14. Die Erstreckung des Bewegungsbereichs 28, insbesondere entlang der Axialrichtung 24, hängt von der zu erhitzenden Werkzeugaufnahme 14, insbesondere von den Maßen der zu erhitzenden Werkzeugaufnahme 14 und des zu befestigenden Werkzeugs 12, ab. Die Steuer-und/oder Regeleinheit 80 ist dazu vorgesehen, den Bewegungsbereich 28 abhängig von einem Werkzeugaufnahmetyp und/oder einem Werkzeugtyp einzustellen.

Die Ein- und/oder Ausschrumpfspannstation 18 weist eine Haltevorrichtung 42 auf. Die Haltevorrichtung 42 ist zu einer Halterung einer Werkzeugaufnahme 14 in der Ein- und/oder Ausschrumpfspannstation 18 vorgesehen. Die Haltevorrichtung 42 umfasst eine Spindeleinheit 100. Die Spindeleinheit 100 ist rotierbar. Die Spindeleinheit 100 ist fest mit einer Basiseinheit (nicht gezeigt) der Ein- und/oder Ausschrumpfspannstation 18 verbunden. Die Haltevorrichtung 42 umfasst einen Vorsatzhalter 64. Der Vorsatzhalter 64 ist austauschbar in die Spindeleinheit 100 einsetzbar. Der Vorsatzhalter 64 ist dazu vorgesehen, einen passenden Aufnahmebereich für einen bestimmten Werkzeugaufnahmetyp bereitzustellen.

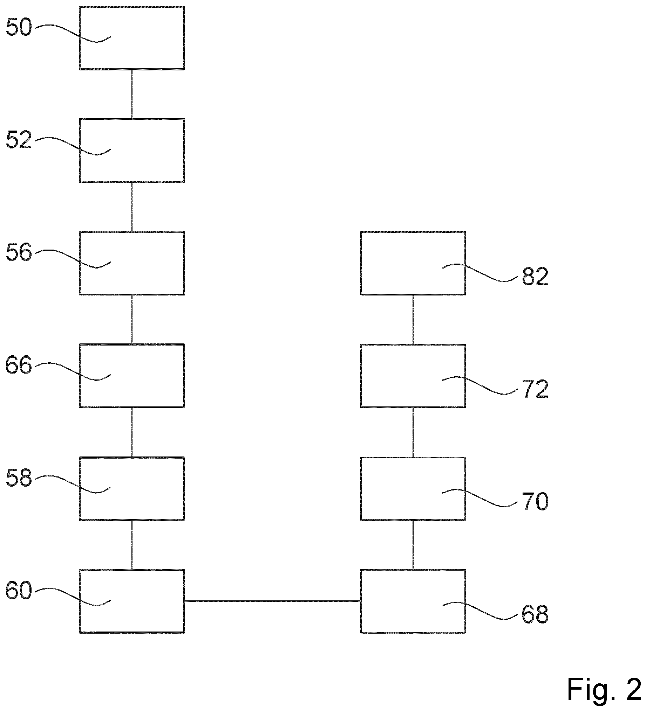

Fig. 2 zeigt ein Ablaufdiagramm eines Verfahrens zu einem Aufheizen einer Werkzeugaufnahme 14 mittels einer Induktionsheizvorrichtung 10. In zumindest einem Verfahrensschritt 50 wird eine Werkzeugaufnahme 14 in die Haltevorrichtung 42 der Ein- und/oder Ausschrumpfspannstation 18 eingesetzt. Wenn die Werkzeugaufnahme 14 ein in ihr befestigtes Werkzeug 12 aufweist, wird in der Folge ein Ausschrumpfvorgang vorgenommen. Wenn die Werkzeugaufnahme 14 kein in ihr befestigtes Werkzeug 12 aufweist, wird in der Folge ein Einschrumpfvorgang vorgenommen. Die im weiteren erläuterten Verfahrensschritte können in ähnlicher Weise in beiden Fällen vorgenommen werden. In zumindest einem Verfahrensschritt 52 wird der Werkzeugaufnahmetyp der in die Ein- und/oder Ausschrumpfspannstation 18 eingesetzten Werkzeugaufnahme 14 durch einen Bediener eingegeben oder automatisch durch ein Auslesen einer Codierung, beispielsweise eines QR-Codes, eines Strichcodes oder eines RFID-Chips, oder durch eine Bilderkennung eines Kamerasystems detektiert. In zumindest einem weiteren Verfahrensschritt 56 wird aus dem ermittelten Werkzeugaufnahmetyp eine Länge der Werkzeugaufnahme 14, ein Durchmesser der Werkzeugaufnahmeöffnung 40 und/oder eine ideale Einschrumpf- und/oder Spanntiefe ermittelt. In dem Verfahrensschritt 56 wird aus dem ermittelten Werkzeugaufnahmetyp der zu erhitzende Bereich der Werkzeugaufnahme 14 ermittelt. In dem Verfahrensschritt 56 wird aus dem ermittelten Werkzeugaufnahmetyp der Spannbereich 22 ermittelt.

In zumindest einem weiteren Verfahrensschritt 66 wird der Bewegungsbereich 28 der Induktionsspule 20 in Abhängigkeit von der jeweiligen aufzuheizenden Werkzeugaufnahme 14, insbesondere in Abhängigkeit von dem Spannbereich 22 der Werkzeugaufnahme 14, eingestellt. In dem Verfahrensschritt 66 wird von der Steuer- und/oder Regeleinheit 80 ermittelt, ob und/oder wieviel die Induktionsspule 20 bewegt werden muss, um den vollständigen Spannbereich 22 gleichmäßig erwärmen zu können. In dem Verfahrensschritt 66 wird die Antriebseinheit 34 und/oder die Induktionsspulen-Antriebseinheit 36 programmiert. In dem Verfahrensschritt 66 wird die Trajektorie, die die Induktionsspule 20 während des Induktionsheizvorgangs abfahren soll, eingestellt. In zumindest einem weiteren Verfahrensschritt 58 wird die Induktionsspule 20 zu einer Erzeugung eines Induktionsmagnetfelds aktiviert. In dem Verfahrensschritt 58 wird der Induktionsheizvorgang zu einer Aufweitung der Werkzeugaufnahmeöffnung 40 der Werkzeugaufnahme 14 gestartet. In zumindest einem weiteren Verfahrensschritt 60 wird die Induktionsspule 20 während des Induktionsheizvorgangs bewegt. In dem Verfahrensschritt 60 wird die Induktionsspule 20 während des Induktionsheizvorgangs oszillierend bewegt. In dem Verfahrensschritt 60 wird die Induktionsspule 20 während des Induktionsheizvorgangs entlang der Axialrichtung 24 der zu erwärmenden Werkzeugaufnahme 14 bewegt. In dem Verfahrensschritt 60 wird die Induktionsspule 20 derart bewegt, dass der Bewegungsbereich 28 der Induktionsspule 20 einen bei dem Induktionsheizvorgang zu erhitzenden Bereich der Werkzeugaufnahme 14 vollständig abdeckt. In dem Verfahrensschritt 60 wird die Induktionsspule 20 derart bewegt, dass der Bewegungsbereich 28 der Induktionsspule 20 den Spannbereich 22 der Werkzeugaufnahme 14 vollständig abdeckt. Der Bewegungsbereich 28, innerhalb dessen die Induktionsspule 20 während des Induktionsheizvorgangs in Axialrichtung 24 maximal bewegt wird, beträgt im gezeigten Beispiel 20 mm. Abweichende maximale Bewegungsbereiche 28 sind denkbar. Eine Frequenz, mit welcher die Induktionsspule 20 während des Induktionsheizvorgangs bewegt wird, beträgt im gezeigten Beispiel 2 Hz. Abweichende Frequenzen sind denkbar. Es ist denkbar, dass, wenn der Spannbereich 22 eine Erstreckung aufweist, welche der Erstreckung der Induktionsspule 20 in der Axialrichtung 24 zumindest im Wesentlichen entspricht, der Bewegungsbereich 28 der Induktionsspule 20 ist, d.h. insbesondere, dass die Induktionsspule 20 in diesem Fall während dem Induktionsheizvorgang unbewegt bleibt.

In zumindest einem weiteren Verfahrensschritt 68 wird die Induktionsspule 20 während des Induktionsheizvorgangs um die parallel zu der Axialrichtung 24 der Werkzeugaufnahme 14 verlaufende Rotationsachse 26 rotierend bewegt. In zumindest einem weiteren Verfahrensschritt 70 wird die Werkzeugaufnahme 14 während des Induktionsheizvorgangs um die parallel zu der Axialrichtung 24 der Werkzeugaufnahme 14 verlaufende Rotationsachse 26 rotierend bewegt. In zumindest einem weiteren Verfahrensschritt 72 wird im Anschluss an ein Erhitzen des Spannbereichs 22 der Werkzeugaufnahme 14 der Spannbereich 22 der Werkzeugaufnahme 14 aktiv gekühlt. In dem Verfahrensschritt 72 wird die oszillierende Bewegung der Induktionsspule 20 dafür verwendet, Kühlluft auf den gesamten zuvor erhitzten Spannbereich 22 der Werkzeugaufnahme 14 aufzubringen. In zumindest einem weiteren Verfahrensschritt 82 wird die abgekühlte Werkzeugaufnahme 14 und/oder das Werkzeug 12 aus der Ein-und/oder Ausschrumpfspannstation 18 entnommen.

### Bezugszeichen

- 10: Induktionsheizvorrichtung
- 12: Werkzeug
- 14: Werkzeugaufnahme
- 16: Induktionsheizeinheit
- 18: Ein- und/oder Ausschrumpfspannstation
- 20: Induktionsspule
- 22: Spannbereich
- 24: Axialrichtung
- 26: Rotationsachse
- 28: Bewegungsbereich
- 30: Achse
- 32: Kühlring
- 34: Antriebseinheit
- 36: Induktionsspulen-Antriebseinheit
- 38: Düse
- 40: Werkzeugaufnahmeöffnung
- 42: Haltevorrichtung
- 44: Antriebswelle
- 46: Rollringgetriebe
- 48: Gehäuse
- 50: Verfahrensschritt
- 52: Verfahrensschritt
- 56: Verfahrensschritt
- 58: Verfahrensschritt
- 60: Verfahrensschritt
- 62: Führungseinheit
- 64: Vorsatzhalter
- 66: Verfahrensschritt
- 68: Verfahrensschritt
- 70: Verfahrensschritt
- 72: Verfahrensschritt
- 74: Öffnung
- 76: Werkzeugschaft
- 78: Arbeitsbereich
- 80: Steuer- und/oder Regeleinheit
- 82: Verfahrensschritt
- 84: Turmeinheit
- 86: Kühleinheit
- 88: Führungsschiene
- 90: Haupterstreckungsrichtung
- 96: Schlitten
- 100: Spindeleinheit

## Patentansprüche

1. Verfahren zu einem Aufheizen einer Werkzeugaufnahme (14) mittels einer Induktionsheizvorrichtung (10) für ein Ein- und/oder Ausschrumpfen von Werkzeugen (12) in und/oder aus Werkzeugaufnahmen (14), insbesondere Induktionsheizeinheit (16) einer Ein- und/oder Ausschrumpfspannstation (18) für Werkzeuge (12), mit einer zumindest eine, vorzugsweise ausschließlich eine, Induktionsspule (20) umfassenden Induktionsheizeinheit (16), welche dazu vorgesehen ist, zumindest einen Teil der Werkzeugaufnahme (14), insbesondere zumindest einen Spannbereich (22) der Werkzeugaufnahme (14), bei einem Einschrumpfvorgang oder bei einem Ausschrumpfvorgang durch Erhitzen aufzuweiten, **dadurch gekennzeichnet, dass** zumindest die Induktionsspule (20) während eines Induktionsheizvorgangs bewegt wird.

2. Verfahren nach Anspruch 1, **dadurch gekennzeichnet, dass** die Induktionsspule (20) während des Induktionsheizvorgangs oszillierend bewegt wird.

3. Verfahren nach Anspruch 1 oder 2, **dadurch gekennzeichnet, dass** die Induktionsspule (20) während des Induktionsheizvorgangs entlang einer Axialrichtung (24) der zu erwärmenden Werkzeugaufnahme (14) bewegt wird.

4. Verfahren nach einem der vorhergehenden Ansprüche, **dadurch gekennzeichnet, dass** die Induktionsspule (20) und/oder die Werkzeugaufnahme (14) während des Induktionsheizvorgangs zumindest teilweise um eine parallel zu einer Axialrichtung (24) der Werkzeugaufnahme (14) verlaufende Rotationsachse (26) rotierend bewegt wird.

5. Verfahren nach einem der vorhergehenden Ansprüche, **dadurch gekennzeichnet, dass** ein Bewegungsbereich (28) der Induktionsspule (20), in welchem die Induktionsspule (20) während des Induktionsheizvorgangs bewegt wird, einen bei dem Einschrumpfvorgang oder bei dem Ausschrumpfvorgang zu erhitzenden Bereich der Werkzeugaufnahme (14), insbesondere den Spannbereich (22) der Werkzeugaufnahme (14), vollständig abdeckt.

6. Verfahren nach einem der vorhergehenden Ansprüche, **dadurch gekennzeichnet, dass** ein Bewegungsbereich (28) der Induktionsspule (20) in Abhängigkeit von der jeweiligen aufzuheizenden Werkzeugaufnahme (14) eingestellt wird.

7. Verfahren nach einem der vorhergehenden Ansprüche, **dadurch gekennzeichnet, dass** die Induktionsspule (20) in Axialrichtung (24) innerhalb eines maximalen Bewegungsbereichs (28) von zumindest 5 mm, vorzugsweise zumindest 10 mm, vorteilhaft zumindest 20 mm, besonders vorteilhaft zumindest 40 mm, bevorzugt zumindest 60 mm und besonders bevorzugt höchstens 100 mm, bewegt wird.

8. Verfahren zumindest nach Anspruch 2, **dadurch gekennzeichnet, dass** die Induktionsspule (20) mit einer Frequenz von zumindest 0,5 Hz, vorzugsweise zumindest 1 Hz, vorteilhaft zumindest 2 Hz, besonders vorteilhaft zumindest 5 Hz, bevorzugt zumindest 10 Hz und besonders bevorzugt höchstens 20 Hz, oszillierend bewegt wird.

9. Verfahren zumindest nach Anspruch 2, **dadurch gekennzeichnet, dass** die oszillierende Bewegung der Induktionsspule (20) im Anschluss an ein Aufheizen der Werkzeugaufnahme (14) dafür verwendet wird, Kühlluft auf den erhitzten Spannbereich (22) der Werkzeugaufnahme (14) aufzubringen.

10. Ein- und/oder Ausschrumpfspannstation (18) für Werkzeuge (12) mit einer, eine Induktionsspule (20) aufweisenden Induktionsheizvorrichtung (10) für ein Ein- und/oder Ausschrumpfen von Werkzeugen (12) in und/oder aus Werkzeugaufnahmen (14), welche zumindest dazu vorgesehen ist, ein Verfahren nach einem der Ansprüche 1 bis 9 auszuführen.

11. Ein- und/oder Ausschrumpfspannstation (18) nach Anspruch 10, **gekennzeichnet durch** eine Turmeinheit (84), mit welcher die Induktionsheizvorrichtung (10) gekoppelt ist und welche eine Antriebseinheit (34) aufweist, die zumindest dazu vorgesehen ist, zumindest die Induktionsheizeinheit (16) der Induktionsheizvorrichtung (10) entlang der Turmeinheit (84) zu bewegen, wobei die Antriebseinheit (34) zumindest dazu vorgesehen ist, eine oszillierende Bewegung der Induktionsheizvorrichtung (10), insbesondere eine relativ zu der Turmeinheit (84) oszillierende Bewegung der Induktionsheizeinheit (16), zu erzeugen.

12. Ein- und/oder Ausschrumpfspannstation (18) nach Anspruch 10 oder 11, **dadurch gekennzeichnet, dass** die Induktionsheizvorrichtung (10) zumindest eine Induktionsspulen-Antriebseinheit (36) aufweist, welche dazu vorgesehen ist, die Induktionsspule (20) relativ zu der Induktionsheizvorrichtung (10), insbesondere relativ zu einem Gehäuse (48) der Induktionsheizeinheit (16), oszillierend zu bewegen.

13. Ein- und/oder Ausschrumpfspannstation (18) nach einem der Ansprüche 10 bis 12, **gekennzeichnet durch** eine Kühleinheit (86), welche zumindest eine Düse (38) aufweist, die dazu vorgesehen ist, Kühlluft in Richtung einer Werkzeugaufnahme (14) zu blasen, wobei die Kühleinheit (86) fest mit der entlang der Axialrichtung (24) oszillierbaren Induktionsheizvorrichtung (10) gekoppelt ist.
